# EUROPÄISCHE PATENTSCHRIFT

(11) **EP 0 887 901 B1**
(45) Veröffentlichungstag und Bekanntmachung des Hinweises auf die Patenterteilung: **27.08.2003**
(21) Anmeldenummer: 98110538.0
(22) Anmeldetag: 09.06.1998
(51) Int. Cl.: H02G 3/04

(54) **Vorrichtung zum Potentialausgleich**
Device for potential level compensation
Dispositif de compensation des différences de potentiel

(30) Priorität: 25.06.1997 DE 29711068 U
(43) Veröffentlichungstag der Anmeldung: 30.12.1998
(73) Patentinhaber: REHAU AG + Co, 95111 Rehau (DE)
(72) Erfinder: Westphal, Hans-Jürgen, 95111 Rehau (DE); Dittmann, Klaus, 95111 Rehau (DE); Schinzel, Hartmut, 95111 Rehau (DE); Peetz, Matthias, 95111 Rehau (DE)

(56) Entgegenhaltungen:
- EP-A- 0 590 616
- DE-U- 7 701 100
- DE-U- 8 119 513

## Beschreibung

Die Erfindung betrifft eine Vorrichtung zum Potentialausgleich bei Kabelkanälen aus Metall, wobei ein aus Federblech bestehendes Übertragungselement sowohl in den Kabelkanal als auch in dessen Abdeckung eingesetzt und jeweils mit einer Potentialausgleichsleitung verbunden ist, und wobei das Übertragungselement einerseits zwei axial aneinandergesetzte Teilkanäle und andererseits ihre axial aneinandergesetzten Abdeckungen jeweils leitend miteinander verbindet.

Aus der EP 0 590 616 B1 ist eine Einrichtung zum Potentialausgleich bekannt, bei der eine ausgestanzte Erdungsklemme am Deckelteil des Kabelkanals angeformt ist. Diese ausgestanzte Erdungsklemme besteht aus einer sogenannten Anschlußfahne, die durch Freischneiden und Biegen an einem der U-Schenkel des Deckelteils hergestellt wird. Auf solche Erdungsklemmen müssen für die elektrische Verbindung zum Erdpotential noch elektrische Leitungen aufgesteckt werden. Die Erdungsklemme oder Erdungsfahne wird in diesem Fall durch einen dreiseitigen Freischnitt in einem U-Schenkel des Kanaldeckels ausgeführt und so gebildete Fahne wird soweit abgebogen, daß der Steckverbinder für die Erdungsleitung aufgeschoben werden kann.

Andere, bekannte Varianten zur Herstellung einer Erdungsverbindung weisen beispielsweise in den lichten Innenraum des Kabelkanals hineinragende, punktgeschweißte Halter auf, die mit den Erdungsleitungen durch Aufstecken, Auflöten und dergleichen Befestigungsarten verbunden sind.

Alle diese Erdungsarten des bekannten Standes der Technik sind in erster Linie montageintensiv und daher mit entsprechenden Kostennachteilen belastet. Darüber hinaus ragen diese Erdungseinrichtungen in den lichten Innenraum der Kabelkanäle hinein und stellen damit ein Verletzungspotential für dort eingezogene Kabel dar. Hier sind insbesondere die scharfen Stanzränder oder die sonstigen scharfen Kanten von Metallteilen als besonders nachteilig zu bezeichnen.

Aus der DE-U 295 08 312.3 ist eine weitere Einrichtung zum Potentialausgleich bekannt, bei der das Potentialausgleichselement in die Kabelhalteklammer verlagert ist. Die freien Klammerenden der Kabelhalteklammer werden dabei mit scharfen Kontaktspitzen versehen, die bei der Verklammerung mit den freien, profilierten Enden der Seitenwände des Kanalunterteils zur Herstellung der elektrisch leitenden Verbindung deren Oberfläche gezielt beschädigen.

Die Verlagerung des Potentialausgleichs in die Halteklammer hat den Vorteil, daß auf jegliche Montagearbeit zur Verbindung einer Erdungsklammer mit einer Litze verzichtet werden kann. Die Erdungsklammer besitzt dabei eine Doppelfunktion, denn sie dient als Halteklammer einerseits zur Abstandshalterung der freien Enden der Seitenwände des Installationskanals und andererseits zum direkten Potentialausgleich zwischen Kanaloberteil und Kanalunterteil.

Bei diesem Stand der Technik wird der Kanaldeckel nach Montage der Kabelhalteklammer in die durch die profilierten Enden der Seitenwandungen des Kabelkanals gebildete Öffnung eingedrückt, wobei der Deckel mit seinen Seitenwandungen entsprechend den Profilierungen der Kanalseitenwandungen gestaltet ist. Diese Montage des Deckels verstärkt noch das Eindringen der Kontaktspitzen in die zugeordneten Wandbereiche an den freien Enden der Kanalseitenwände und sichert damit die Kontaktierung auch bei oberflächenbeschichteten, z. B. lackierten Kanalwänden.

Die bekannte Kombination Kabelhalteklammer - Potentialausgleich hat jedoch den Nachteil, daß eine Überbrückung verschiedener Kabelkanal-Abschnitte mit ihr nicht möglich ist. Hier sind nach wie vor zum Potentialausgleich Federbleche erforderlich, die beispielsweise nach der DE 36 33 604 C2 an den seitlichen Innenwänden des Kabelkanalprofils verrrastet werden und ein Kabelkanalprofil mit dem benachbarten anderen Kabelkanalprofil elektrisch leitend verbinden.

Die gleiche Verbindungsart muß in der Regel auch mit den benachbarten Deckelteilen erfolgen, so daß sich hier ein erheblicher zusätzlicher Montageaufwand ergibt.

Hier setzt die Erfindung ein, die es sich zur Aufgabe gestellt hat, den Montageaufwand bei der Herstellung der Potentialausgleiche zwischen Deckel und Deckel sowie Kanalunterteil und Kanalunterteil auf ein Minimum zu reduzieren. Erfindungsgemäß wird dazu vorgeschlagen, daß das Übertragungselement ein gestanztes, gestrecktes Bauteil aus Stahlblech ist, welches an seinen Längsrändern Kontaktspitzen trägt, die ein geringfügiges Übermaß zum lichten Innenmaß des Kabelkanals aufweisen, und daß das Bauteil an seinen freien Querrändern in Form wenigstens einer Kontaktspitze nach oben zur elektrischen Kontaktierung der Abdeckung aufgebogen ist.

Es hat sich als vorteilhaft herausgestellt, daß das Bauteil als Potentialverbinder für jeden benachbarten Teilkanal jeweils wenigstens eine Kontaktspitze an jeder Längsseite besitzt, und daß die Teilbereiche mit den Kontaktspitzen über ein gestrecktes Mittelteil miteinander verbunden sind.

Weiter erscheint es zweckmäßig, daß das Bauteil als Potentialverbinder für jedes benachbarte Deckelteil jeweils wenigstens eine Kontaktspitze an jedem Querrand besitzt, und daß die Teilbereiche mit den Kontaktspitzen über ein gestrecktes Mittelteil miteinander verbunden sind.

In dem gestreckten Mittelteil zwischen den Kontaktspitzen der Längs- und Querränder kann eine Kontaktzunge für die Verbindung mit der Potentialausgleichsleitung freigeschnitten sein.

Die erfindungsgemäße Vorrichtung zum Potentialausgleich ist ein gestrecktes Bauteil aus Stahlblech, welches aus einem Stahlband mit einer zur Querabmessung größeren Längskante ausgestanzt ist.

Das Bauteil trägt an seinen Längsrändem wenigstens zwei Kontaktspitzen, wobei diese Kontaktspitzen jeweils benachbarten Kabelkanälen zugeordnet sind. Da das Bauteil eine geringfügig größere Querabmessung gegenüber dem lichten Innenmaß des Kabelkanals besitzt, kann es von innen in die Deckelprofilierung an den freien Rändern der Seitenwände des Kabelkanals so eingesetzt werden, daß die Seitenwände des Kabelkanals in Vorspannung an den seitlichen Kontaktspitzen des Bauteils anliegen. Schon dadurch kommt es zu einer Kontaktierung zwischen dem Bauteil und den Seitenwänden des Kabelkanals, da über die Vorspannung der Seitenwände die Kontaktspitzen des Bauteils die beispielsweise Lackierung des Kanals an den Kontaktstellen durchdringen.

Diese Kontaktierung wird noch verstärkt durch das Aufsetzen des Deckelteils, da hier die freien Enden der Seitenwände des Kabelkanals noch stärker auf die Kontaktspitzen des Bauteils aufgedrückt werden.

Sind die Kontaktspitzen des Bauteils an den seitlichen Längsrändern noch in der Bauteilebene gehalten, so sind im Gegensatz dazu die Kontaktspitzen an den Querrändem des Bauteils nach oben aufgebogen. Diese Kontaktspitzen müssen so weit nach oben abstehen, daß sie den freien oberen Rand der Seitenwände des Kanalunterteils überragen und somit das Deckelteil bei dessen Verbindung mit den freien Rändern der Seitenwände des Kanalunterteils kontaktieren können. Die Kontaktspitzen an den Querrändem des Bauteils sind vorteilhaft schräg nach oben gestellt, so daß beim Aufsetzen des Deckelteils auf das Kanalunterteil ein gewisser Federeffekt ausgenutzt werden kann.

Bei diesem Aufsetzen des Deckelteils auf das Kanalunterteil stellen die Kontaktspitzen an den Querrändem des Bauteils den elektrisch leitenden Kontakt zum Deckelteil her. Auf diese Weise ist mit einem einzigen Bauteil der elektrische Kontakt zwischen zwei benachbarten Unterteilen und zwei benachbarten Deckelteilen eines Kabelkanals hergestellt. Zur Ableitung des elektrischen Potentials ist im gestreckten Mitteilteil des Übertragungselements eine Kontaktzunge freigeschnitten.

Über diese Kontaktzunge wird in bekannterweise die Erdung des Kabelkanals vorgenommen, in dem beispielsweise der Stecker einer Erdleitung über die Kontaktzunge geschoben wird.

In der Zeichnung ist ein Ausführungsbeispiel der erfindungsgemäßen Vorrichtung zum Potentialausgleich schematisch dargestellt; es zeigt:
Fig. 1 das Bauteil mit Kontaktspitzen in Draufsicht.
Fig. 2 das Bauteil gemäß Fig. 1 in Seitenansicht.
Fig. 3 das Bauteil im Einsatz an den freien Rändern eines Kabelkanalunterteils.

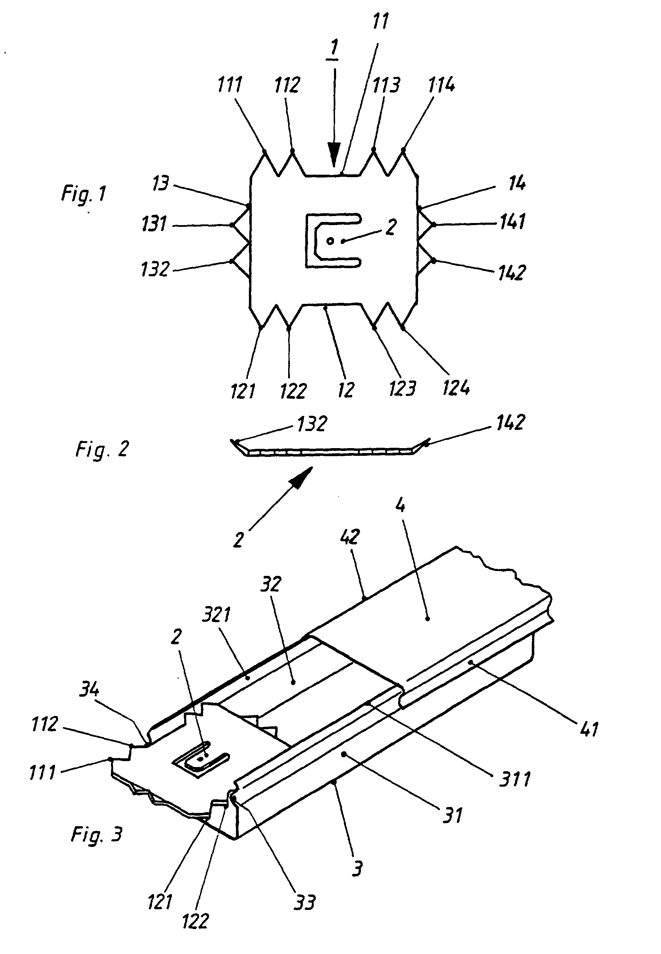

Fig. 1 zeigt das Bauteil 1 in Draufsicht. Das Bauteil 1 hat zwei Längsränder 11, 12 und zwei Querränder 13, 14. Die Längsränder 11, 12 tragen jeweils vier Kontaktspitzen 111, 112, 113, 114 sowie 121, 122, 123, 124. Diese Kontaktspitzen können in der Bauteilebene verlaufen. Sie können jedoch im Bedarfsfall auch aus dieser Ebene heraus auf- oder abgebogen sein.

An den Querrändern 13, 14 sind jeweils zwei Kontaktspitzen 131, 132, 141, 142 angeordnet. Diese Kontaktspitzen 131, 132, 141, 142 sind - wie Fig. 2 zeigt - nach oben angewinkelt. Dieses Anwinkeln ist erforderlich, um den Kontakt zum Deckelteil herzustellen, welches nach dem Einsetzen des Bauteils 1 in die freien Enden der Seitenwände des Kabelkanals auf diese freien Enden aufgesetzt wird.

Im Mittelteil des Bauteils 1 ist die Kontaktzunge 2 freigeschnitten. Diese Kontaktzunge 2 dient zur Anordnung eines Erdleitungs-Steckers, damit das Potential abgeleitet werden kann.

Fig. 3 zeigt das Bauteil 1 im Einsatz an den freien Rändern 311, 321 der Seitenwände 31, 32 eines Kabelkanal-Unterteils 3. Die freien Ränder 311, 321 besitzen eine nutenförmige Einkerbung 33, 34, in die die Kontaktspitzen 113, 114, 123, 124 des Bauteils 1 eingreifen. Die Kontaktspitzen 111, 112 sowie 121, 122 ragen mit dem vorderen Teil des Bauteils 1 nach vom ab. Dieser vordere Teil des Bauteils 1 mit den Kontaktspitzen 111, 112, 121, 122 wird mit den freien Rändern des in der Zeichnung nicht dargestellten, benachbarten Kabelkanals kontaktiert.

Auf das Kabelkanal-Unterteil 3 ist das Deckelteil 4 aufgesetzt, welches zur Sichtbarmachung des Einsatzes des Bauteils 1 freigeschnitten ist. Das Deckelteil 4 mit seinen abgekanteten Rändern 41, 42 überfaßt die freien Ränder 311, 321 des Kabelkanal-Unterteils 3 und rastet von außen in die Nut 33, 34 ein. Der gewünschte Potentialausgleich zu Kabelkanallänge auf Kabelkanallänge sowie Deckellänge auf Deckellänge ist damit hergestellt.

## Patentansprüche

1. Vorrichtung zum Potentialausgleich bei Kabelkanälen aus Metall, wobei ein aus Federblech bestehendes Übertragungselement sowohl in den Kabelkanal als auch in dessen Abdeckung eingesetzt und jeweils mit einer Potentialausgleichsleitung verbunden ist, und wobei das Übertragungselement einerseits zwei axial aneinandergesetzte Teilkanäle und andererseits ihre axial aneinandergesetzten Abdeckungen jeweils leitend miteinander verbindet, **dadurch gekennzeichnet, daß** das Übertragungselement ein gestanztes, gestrecktes Bauteil (1) aus Metall ist, welches an seinen Längsrändern (11, 12) Kontaktspitzen (111, 112, 113, 114, 121, 122, 123, 124) trägt, die ein geringfügiges Übermaß zum lichten Innenmaß des Kabelkanal-Unterteils (3) aufweisen, und daß das Bauteil wenigstens an einem seinen freien Querrändem (13, 14) in Form wenigstens einer Kontaktspitze (131, 132, 141, 142) nach oben zur elektrischen Kontaktierung des Deckelteils (4) aufgebogen ist.

2. Vorrichtung nach Anspruch 1, **dadurch gekennzeichnet, daß** das Bauteil (1) als Potentialverbinder für jedes benachbarte Kabelkanal-Unterteil (3) jeweils wenigstens eine Kontaktspitze (111, 112, 113, 114, 121, 122, 123, 124) an jeder Längsseite (11, 12) besitzt, und daß die Teilbereiche mit den Kontaktspitzen (111, 112, 113, 114, 121, 122, 123, 124) über ein gestrecktes Mittelteil miteinander verbunden sind.

3. Vorrichtung nach Anspruch 1, **dadurch gekennzeichnet, daß** das Bauteil (1) als Potentialverbinder für jedes benachbarte Deckelteil (4) jeweils wenigstens eine Kontaktspitze (131, 132, 141, 142) an jedem Querrand (13, 14) besitzt, und daß die Teilbereiche mit den Kontaktspitzen (131, 132, 141, 142) über ein gestrecktes Mittelteil miteinander verbunden sind.

4. Vorrichtung nach Ansprüchen 1 bis 3, **dadurch gekennzeichnet, daß** im gestreckten Mittelteil des Bauteils (1) eine Kontaktzunge (2) für die Verbindung mit einer Anschlußleitung freigeschnitten ist.

## Claims

1. Device for equipotential bonding in metal cable trunking, wherein a transmitting element made of spring sheet steel is placed in both the trunking and its lid and is connected in each case to an equipotential bonding cable, and wherein the transmitting element electroconductively connects two axially juxtaposed trunking sections and also their axially juxtaposed lids, **characterised in that** the transmitting element is a stamped and stretched metal component (1) with longitudinal edges (11, 12) bearing contact points (111, 112, 113, 114, 121, 122, 123, 124), the dimensioning of which slightly exceeds the clear inner dimension of the cable trunking base (3), and **in that** at least one free transverse edge (13, 14) of the component is bent upwards to form at least one contact point (131, 132, 141, 142) for making electrical contact with the trunking lid (4).

2. Device according to claim 1, **characterised in that** for each adjoining cable trunking base (3) the component (1) has a potential connector in the form of at least one contact point (111, 112, 113, 114, 121, 122, 123, 124) on each longitudinal edge (11, 12), and **in that** the portions with the contact points (111, 112, 113, 114, 121, 122, 123, 124) are joined to each other by a stretched central portion.

3. Device according to claim 1, **characterised in that** for each adjoining cable trunking lid (4) the component (1) has a potential connector in the form of at least one contact point (131, 132, 141, 142) on each transverse edge (13, 14), and **in that** the portions with the contact points (131, 132, 141, 142) are joined to each other by a stretched central portion.

4. Device according to claims 1 to 3, **characterised in that** a contact tongue (2) is cut free in the stretched central portion of the component (1) to allow connection to a connection lead.

## Revendications

1. Dispositif de compensation de potentiel pour goulottes en métal à un élément de transmission constitué par une tôle élastique à effet ressort est implanté à la fois sur l'embase et sur son couvercle, chacun étant relié à un câble conducteur d'équipotentialité et à l'élément de transmission relie, en établissant une connexion, deux éléments d'embase aboutés dans l'axe d'une part et leurs couvercles aboutés dans l'axe d'autre part, **caractérisé en ce que** l'élément de transmission est une pièce en métal (1) poinçonnée et plate, possédant sur ses bords longitudinaux (11, 12) des pointes de contact (111, 112, 113, 114, 121, 122, 123, 124) qui dépassent légèrement la dimension intérieure des lumières de l'embase de la goulotte (3),et **en ce que** l'élément de transmission présente au minimum sur l'un de ses bords latéraux libres (13, 14) sous la forme d'au moins une pointe de contact (131, 132, 141, 142) repliée vers le haut, assure un contact électrique avec le couvercle (4).

2. Dispositif selon la revendication 1, **caractérisé en ce que** l'élément (1) de connecteur de potentiel, dispose pour toute embase de goulotte adjacente (3) d'au moins une pointe de contact (111, 112, 113, 114, 121, 122, 123, 124) sur chacun de ses bords longitudinaux (11,12) et que les différentes zones sont reliées entre elles à l'aide des pointes de contact (111, 112, 113, 114, 121, 122, 123, 124) et par l'intermédiaire d'une pièce centrale plate.

3. Dispositif selon la revendication 1, **caractérisé par le fait que** l'élément (1) jouant le rôle de connecteur de potentiel, dispose pour tout couvercle de goulotte adjacent (4) d'au moins une pointe de contact (131, 132, 141, 142) sur chacun de ses bords latéraux (13,14) et que les différentes zones sont reliées entre elles à l'aide des pointes de contact (131, 132, 141, 142) et par l'intermédiaire d'une pièce centrale plate.

4. Dispositif selon les revendications 1 à 3, **caractérisé en ce que** dans la pièce centrale plate de l'élément (1) une lame de contact (2) a été découpée pour la connexion avec une ligne de raccordement.
